# EUROPEAN PATENT APPLICATION

(11) **EP 2 333 928 A2**
(43) Date of publication of application: **15.06.2011**
(21) Application number: 10015392.3
(22) Date of filing: 07.12.2010
(51) Int. Cl.: H02J 7/00, H01L 31/00

(54) **Solar-powerded battery charging station**

(30) Priority: 08.12.2009 JP 2009278856
(71) Applicant: Sanyo Electric Co., Ltd., Osaka 570-8677 (JP)
(72) Inventor: Uchihashi, Kenji, Osaka 570-8677 (JP); Miyai, Hiroyuki, Osaka 570-8677 (JP)
(74) Representative: Glawe, Delfs, Moll

(57) **Abstract**

The present invention provides an apparatus which is capable of efficiently utilizing electricity stored in a rechargeable battery unit, e.g. during the nighttime, thereby charging an increased number of electric vehicles, etc. The apparatus according to the present invention includes: a roof member 11 supported by supporting poles 10; photovoltaic modules 2 provided on the roof member 11; a rechargeable battery unit which stores electricity generated by the photovoltaic modules 2; charging units which supply charging electricity to vehicles; LED lighting elements 3 which has high-luminosity LED lighting elements and low-luminosity LED lighting elements lit with electricity from the rechargeable battery unit; and a control unit which detects the vehicles and controls turning ON and OFF of the lighting appliances based on the detection.

## Description

The priority application Number JP2009-278856 upon which this patent application is based is hereby incorporated by reference.

### BACKGROUND OF THE INVENTION

### Field of the Invention

The present invention relates to solar-powered battery charging stations. The solar-powered battery charging stations generate electric power from sunlight, and provide such a service as supplying the generated power to electric vehicles, plug-in hybrid vehicles and so on.

### Description of the Prior Art

Electric vehicles and hybrid vehicles are known as environmentally friendly.

A hybrid vehicle incorporates a power storage device, an inverter and an electric motor, as a power source for moving the vehicle in addition to a conventional internal combustion engine. Among these hybrid vehicles, attentions are being paid to so-called plug-in hybrid vehicles in which the power storage device is chargeable by using outside power sources (such as a household power outlet) for increased mileage to be achieved solely by the electric motor.

An electric vehicle, which does not incorporate an internal combustion engine, is driven solely by an electric motor. These plug-in hybrid vehicles and electric vehicles can be more environmentally friendly if their power storage devices which are designed to store externally supplied electricity are charged with electricity generated by solar cells.

Proposals are already made for electric-vehicle charging systems for supplying electric power generated from sunlight, without using conventional commercial source of electricity. Such a system is disclosed in JP-A 2003-102104 for example.

These systems typically include photovoltaic modules; a rechargeable battery unit for storage of electric power generated by the photovoltaic modules; and chargers for supplying the electric power to electric vehicles and/or other client equipment.

### SUMMARY OF THE INVENTION

The above-described systems are capable of charging electric vehicles, etc. with electric power generated from sunlight. During night times, for example, charging and other operations are performed by using electricity which was stored during the daytime in the rechargeable battery unit. Since the rechargeable battery unit has a limited storage capacity, it is desirable that the stored electricity should be utilized as efficiently as possible.

An object of the present invention is to provide an apparatus which is capable of efficiently utilizing the electricity which is stored during the daytime and supplied from the rechargeable battery unit during the nighttime for example, thereby charging an increased number of electric vehicles, etc.

The present invention provides a solar-powered battery charging station which includes: a roof member supported by a support member; photovoltaic modules provided on the roof member; a rechargeable battery unit for storage of electricity generated by the photovoltaic modules; a charging unit for supply of charging electricity to a vehicle; lighting equipment having lighting appliances lit with electricity from the rechargeable battery unit; and a control unit for control of turning ON and OFF of the lighting appliances based on the detection.

The lighting appliances may include a low-luminosity LED lighting element and a high-luminosity LED lighting element. With this arrangement, the control unit turns ON the low-luminosity LED lighting element on standby while turning ON the high-luminosity LED lighting element to illuminate a parking space upon detection of a vehicle which is entering the parking space.

The solar-powered battery charging station may include a sensor for detecting vehicles. The lighting appliances may include a plurality of lighting elements, and the control unit may elect the lighting elements to be turned ON based on an output of the sensor

Further, the lighting appliances may include a lighting appliance for illuminating an operation section of the charging unit. With this arrangement, the control unit turns ON the lighting appliance for illuminating the operation section upon detection of a vehicle stopping in the parking space.

Further, solar-powered battery charging station is connected to a commercial power system, and the rechargeable battery unit may be charged with electricity generated by the photovoltaic modules in combination with electricity supplied from the commercial power system.

Also, the charging unit includes an AC charging unit and a DC charging unit.

Also, the support member may include a column section and an arch section which provides an upward opening structure. With this arrangement, the lighting equipment is installed on the arch section.

Also, the roof member may include a circular outer frame, and support frames which are connected to the outer frame to form a grid-like structure.

As understood, the present invention provides ON/OFF control of the lighting equipment, thereby providing efficient control on power consumption from the rechargeable battery unit, and hence maximizes the amount of electricity for charging vehicles.

### BRIEF DESCRIPTION OF THE DRAWINGS

Fig. 1 is a perspective view of a solar-powered battery charging station according to an embodiment of the present invention.

Fig. 2 is a bottom view of the solar-powered battery charging station according to the embodiment of the present invention as viewed from the ground.

Fig. 3 is a front view of the solar-powered battery charging station according to the embodiment of the present invention.

Fig. 4 is a plan view of the solar-powered battery charging station according to the embodiment of the present invention, showing parking spaces.

Fig. 5 is a plan view of the solar-powered battery charging station according to the embodiment of the present invention, showing a vehicle entering one of the parking spaces.

Fig. 6 is a side view of the solar-powered battery charging station according to the embodiment of the present invention, showing a vehicle stopping at one of the parking spaces.

Fig. 7 is an illustrative drawing of an LED lighting element in the solar-powered battery charging station according to the embodiment of the present invention.

Fig. 8 is a block diagram showing a configuration of the solar-powered battery charging station according to the embodiment of the present invention.

Fig.9 is a block diagram showing a configuration of the solar-powered battery charging station according to the second embodiment of the present invention.

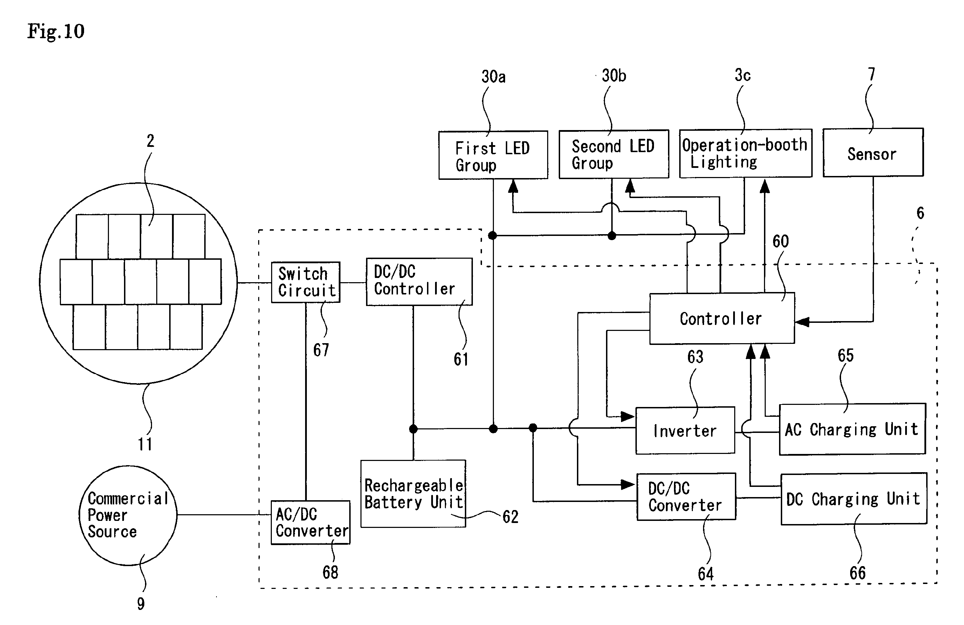

Fig.10 is a block diagram showing a configuration of the solar-powered battery charging station according to the third embodiment of the present invention.

Fig.11 is an illustrative drawing of an LED lighting element in the solar-powered battery charging station according to the third embodiment of the present invention.

Fig.12 is an illustrative drawing of an LED lighting element in the solar-powered battery charging station according to the third embodiment of the present invention.

### DETAILED DESCRIPTION OF THE PREFERRED EMBODIMENTS

An embodiment of the present invention will be detailed with reference to the drawings. It should be noted here that for the sake of avoiding redundancy, elements and components which are identical with or equivalent to each other will be indicated with the same reference symbols, and their description will not be repeated.

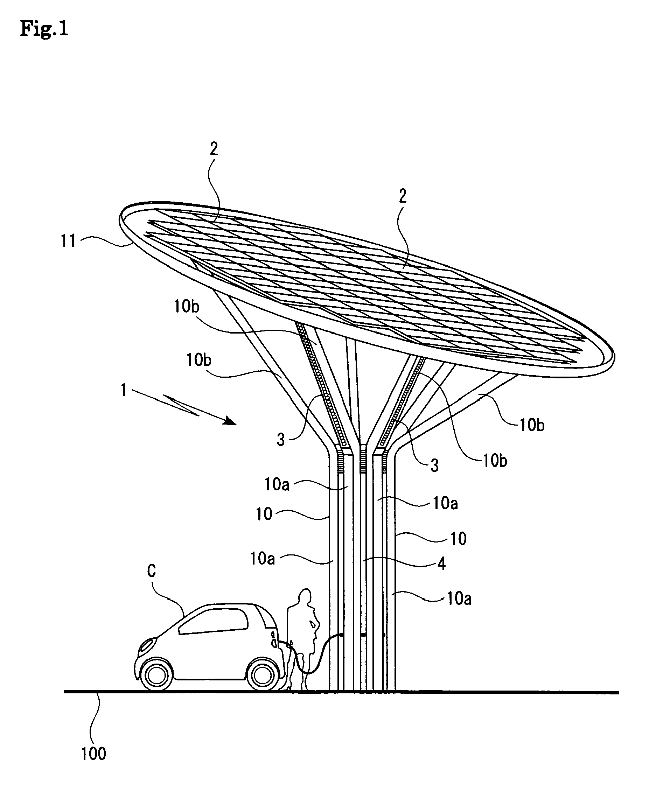

Fig. 1 is a perspective view of a solar-powered battery charging station according to an embodiment of the present invention. As shown in Fig. 1, in the solar-powered battery charging station 1 according to the present invention, a plurality of supporting poles 10 are erected on the ground (a floor) 100 to support a roof member 11, to which photovoltaic modules 2 are attached. In the present embodiment, six supporting poles 10 support a circular roof member 11.

Each of the supporting poles 10 has a post section 10a which rises vertically from the ground (floor) 100, and an arch section 10b which makes an upward opening structure extending from the post section 10a. The post sections 10a surround a center trunk section 4 which houses a rechargeable battery unit. In addition to the rechargeable battery unit, the trunk section 4 houses chargers (charging units); a control unit which includes electric components for controlling the station; and other components.

LED lighting elements 3 are installed in the arch sections 10b to provide illumination to parking spaces, charging plugs and other operation sections, etc. in the charging units.

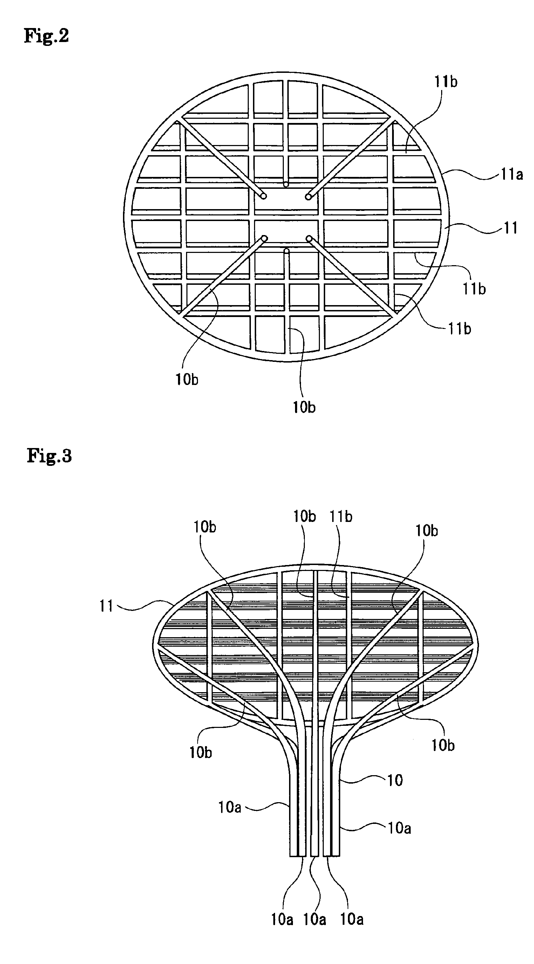

As shown in Fig. 2 and Fig. 3, the roof member 11 has a circular outer frame 11a and support frames 11b connected to the outer frame 11a to make a grid-like structure. The roof member 11 is supported by the supporting poles 10 at a predetermined tilt angle so that sunlight will hit light receiving surfaces of the photovoltaic modules 2 from a perpendicular direction. In the present embodiment, the tilt angle is between 20 degrees and 40 degrees, with the orientation in the south.

The photovoltaic modules 2 are attached to the roof member 11. Each photovoltaic module 2 has a plurality of solar cells and these solar cells are electrically connected for making a predetermined output of electricity.

The solar cells can be selected from many kinds, including crystalline silicon solar cells made of monocrystalline silicon or polycrystalline silicon; thin-film solar cells made of amorphous silicon or microcrystalline silicon; and solar cells made of other chemical compounds.

In each photovoltaic module 2, a plurality of electrically connected solar cells are sealed between a translucent front surface member made of glass or translucent plastic for example, and a translucent rear surface member made of weather-resistant film, glass or translucent plastic for example with a sealing material having a translucent resin sealant material such as EVA (ethylene vinylacetate). In the present embodiment, the rear surface member is also provided by a translucent material, and the photovoltaic modules 2 are of a dual-surface light-reception type in which the solar cells receive light from both the front and the rear surfaces.

The photovoltaic modules 2 are interconnected in series or parallel depending on their power generating capability, and the interconnecting wiring is routed to the control unit which is housed in the trunk section 4. As the sunlight hits the photovoltaic modules 2 mounted on the roof member 11, each of the photovoltaic modules 2 generates electricity, which is then stored in the rechargeable battery unit. In addition, some of the sunlight which passes through narrow gaps between the solar cells in each photovoltaic module 2 makes a pleasant and comfortable shower of sun beams on the ground under the roof member 11 as if they were scattering through tree leaves.

Electricity generated by the photovoltaic modules 2 is stored by the rechargeable battery unit in the trunk section 4, and then supplied by the control unit to four vehicles C in the case of the present embodiment, including electric vehicles and plug-in hybrid vehicles so as to charge secondary batteries in these vehicles C.

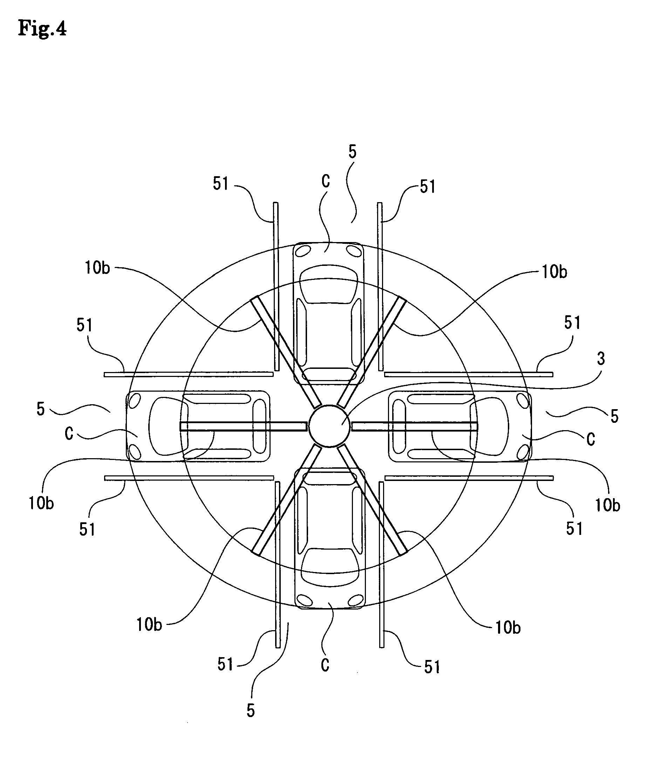

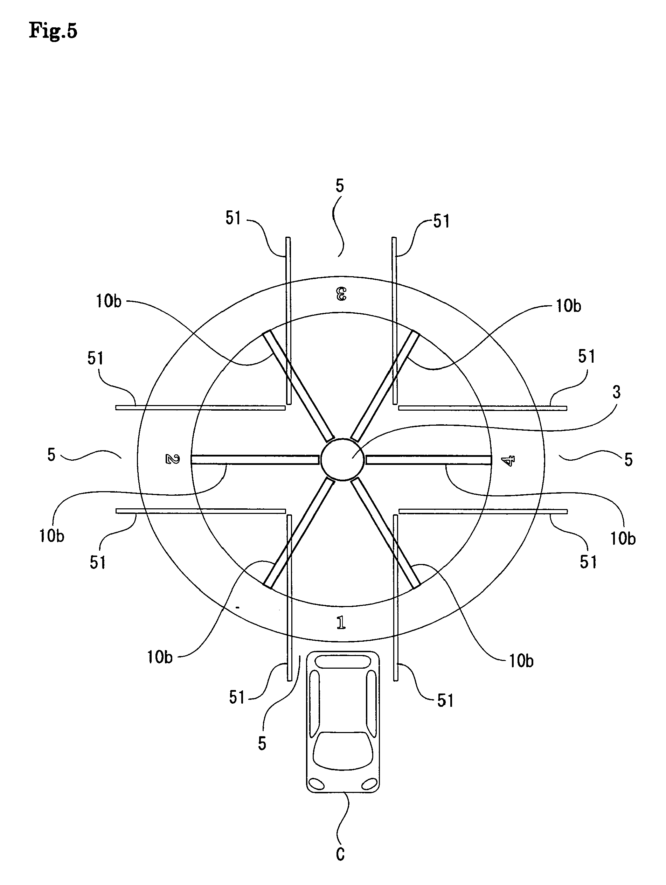

As shown in Fig. 4 and Fig. 5, parking spaces 5 for four vehicles are provided in the present embodiment. Each of the parking spaces 5 is identified with area lines 51 which define the parking space 5, as well as with a parking area number for example, which is drawn on the ground (floor) 100. The charging unit is installed in the trunk section 4 within an access from the parking space 5.

In the present embodiment, the charging unit is capable of supplying 400-volt direct current (DC) power and 200-volt alternating current (AC) power for example. However, the charging unit is not limited to this, and may be built to supply 100 VAC and 200 VAC for example.

The LED lighting elements 3 provide lighting for the parking spaces, power outlets and operation sections in the charging units, as well as lighting when the charging units are on standby. These LED lighting elements 3 work on electricity supplied from the rechargeable battery unit. In the present embodiment, each LED lighting element 3 is controlled so that it will be turned ON only on demand, for efficient use of power from the rechargeable battery unit.

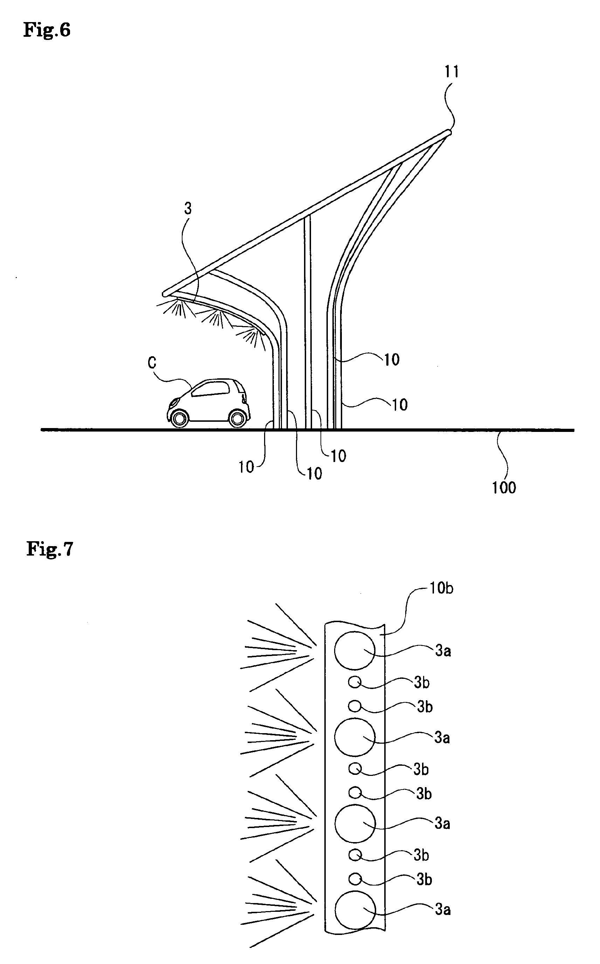

As shown in Fig. 7, the LED lighting elements 3 have high-output high-luminosity LED lighting elements 3a and low-output low-luminosity LED lighting elements 3b for different lighting purposes. In order to provide ON/OFF control on these LED lighting elements 3a, 3b, the solar-powered battery charging station 1 has sensors for detecting vehicles C which are coming into individual parking spaces 5. The LED lighting elements 3 are turned ON/OFF depending on the output from each sensor.

When sensor outputs indicate that there is no vehicle, the low-output, low-luminosity LED lighting elements 3b are turned ON to save electricity. When sensor outputs indicate that there is an incoming vehicle C, a corresponding one of the parking spaces 5 are highlighted by the corresponding high-output high-luminosity LED lighting elements 3a which are turned ON to illuminate the area lines 51, the parking area number, etc. to guide the vehicle C.

When sensor outputs indicate that the vehicle C has stopped, the LED lighting elements 3a as a guide to the parking space 5 are turned OFF while the operation section is illuminated by other LED lighting elements to facilitate the charging operation.

As described, ON/OFF control of the LED lighting elements 3 is performed in accordance with the position of the vehicles C, whereby power consumption from the rechargeable battery unit is controlled efficiently to maximize the amount of electricity which can be used for charging the vehicles C.

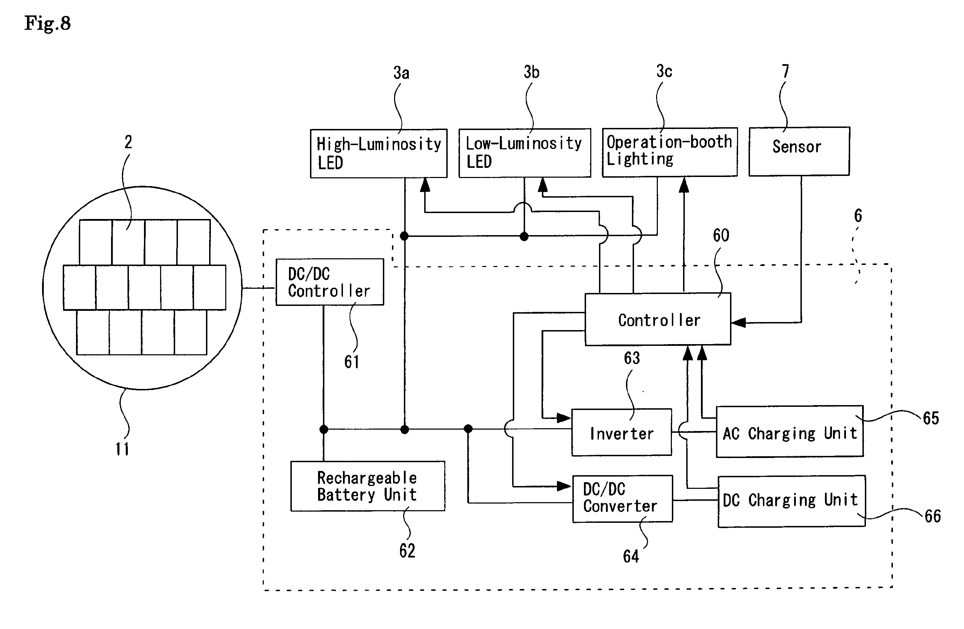

Hereinafter, the embodiment of the present invention will be described further with reference to a block diagram in Fig. 8.
Electricity generated in the photovoltaic modules 2 on the roof member 11 is supplied to the control unit 6 in the trunk section 4. The control unit 6 includes a controller 60 which provides overall control of the system; a DC/DC controller 61; a rechargeable battery unit 62; an inverter 63; a DC/DC converter 64; AC charging units 65; and DC charging units 66.

Electricity from the photovoltaic modules 2 is supplied to the DC/DC controller 61. The DC/DC controller 61 performs over-current prevention, back-flow prevention, over-charge prevention, and other control operations to the DC power which comes from the photovoltaic modules 2, and then creates an appropriate voltage for the rechargeable battery unit 62 which is provided by e.g. Nickel-Hydrogen batteries and lithium ion secondary batteries, and thus supplies an electric current to the rechargeable battery unit 62. The rechargeable battery unit 62 includes one rechargeable battery or more than one rechargeable batteries. The rechargeable battery unit 62 is charged with the electric current supplied from the DC/DC controller 61. In other words, the rechargeable battery unit 62 is charged with electricity which is generated in the photovoltaic modules 2.

From the rechargeable battery unit 62, electric power is outputted to the high-luminosity LEDs 3a, low-luminosity LEDs 3b and operation-booth lighting LEDs 3c, based on the control provided by the controller 60.

The rechargeable battery unit 62 also outputs electric power to the inverter 63 and the DC/DC converter 64. The inverter 63 creates an AC voltage, 100 VAC or 200 VAC for example, from the supplied DC power. The AC power from the inverter 63 is supplied to the AC charging units 65 in the form of 3-wire 200-volt AC power. The charging units 65 perform a conventional charging-unit process for providing power-charging service to the vehicle C including electric vehicles and plug-in hybrid vehicles, via unillustrated connectors. During the daytime, electricity generated in the photovoltaic modules 2 may be directly supplied to the inverter 63 and the DC/DC converter 64, and then supplied to the AC charging unit 65 and the DC charging unit 66. The electricity is controlled by the DC/DC controller 61 and the DC/DC controller 61 may create a predetermined voltage.

The charging can be performed in discretionary methods. However, "200 volt inductive charging method" for non-contact electromagnetic induction charging and "200/100 volt conductive charging method" for conventional plug-in charging may be adopted so that the unit can serve various types of electric vehicles and other client equipment.

With the installation of the rechargeable battery unit 62 as described above, electricity from the photovoltaic modules 2 can be stored without being wasted, and it is now possible to charge the vehicles C even during the night time when power generation is impossible, by using the power stored in the rechargeable battery unit 62. Also, even when the amount of power stored in the rechargeable battery unit 62 is small, it is possible to charge the vehicle C by using electricity directly from the photovoltaic modules 2 as long as the photovoltaic modules 2 can generate a sufficient amount of power.

The DC/DC converter 64 converts the voltage from the rechargeable battery unit 62 into a DC current which has a maximum voltage of 400 V and a maximum current of 75A, and then supplies the converted power to the DC charging units 66. The charging units 65 perform a conventional charging-unit process for providing power-charging service to the vehicles C via unillustrated connectors.

Information of the charging unit to be used is supplied to the controller 60, and the controller 60 activates the inverter 63 or the DC/DC converter 64 depending on the charging unit to be used.

The LED lighting elements 3 have high-output high-luminosity LED lights 3a, low-output low-luminosity LED lights 3b and operation-booth lights 3c for different areas to be lit. In order to provide ON/OFF control on these LED lighting elements 3, the solar-powered battery charging station 1 has sensors 7 for detecting vehicles C which are coming into individual parking spaces 5. Outputs from these sensors 7 are supplied to the controller 60. In response to the outputs from the sensors 7, the controller 60 controls turning ON/OFF of the high-output high-luminosity LED lighting elements 3a, the low-output low-luminosity LED lighting elements 3b and the operation-booth lighting elements 3c.

When the outputs from the sensors 7 indicate that there is no vehicle C coming in or no vehicle C parking in the parking space 5, the controller 60 turns ON the low-luminosity LED lighting elements 3b in standby mode, thereby saving electricity. When the outputs from the sensors 7 indicate that there is an approaching vehicle C as shown in Fig. 5 and Fig. 6, a corresponding one of the parking spaces 5 is highlighted by turning ON the corresponding high-luminosity LED lighting elements 3a to illuminate the area lines 51, the parking area number, etc. to guide the vehicle C. Fig. 5 shows a case where the sensors 7 detect a vehicle C entering the parking space 5 identified with a parking space number one, and so the area lines 51 and the parking number "1" indicating the space are illuminated by the high-luminosity LED lighting elements 3a.

When the output from the sensors 7 indicates that the vehicle C has stopped, the LEDs 3a as a guide to the parking space 5 are turned OFF while the operation-booth lighting LEDs 3c are turned ON so that the operation sections in the units 65, 66 can be seen easily, to facilitate smooth operation for charging.

As described, ON/OFF control of the LED lighting elements 3 is performed in accordance with the position of the vehicles C, whereby power consumption from the rechargeable battery unit 62 is controlled efficiently to maximize the amount of electricity which can be used for charging vehicles.

It should be noted here that color of the light from the LED lighting elements 3 is not limited to white. Different colors may be used for different purposes such as guiding the vehicles, illuminating the operation sections, and indicating a standby status.

Obviously, the term vehicles used in the present invention includes not only automobile-type vehicles such as electric vehicles and plug-in hybrid vehicles but also other vehicles such as electrically assisted bicycles.

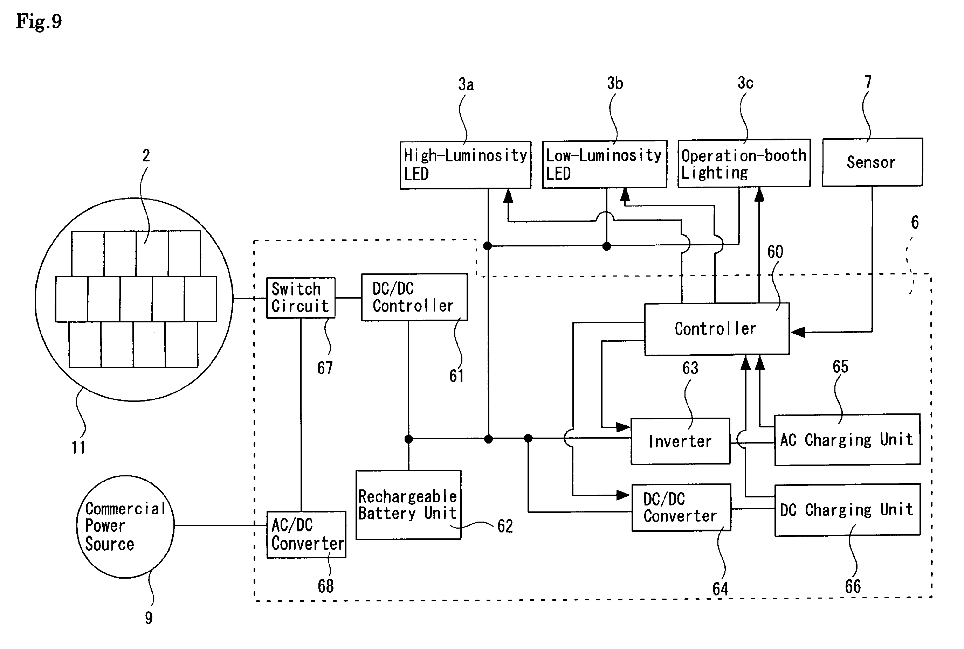

In the embodiment described above, the rechargeable battery unit is charged with electricity generated by the photovoltaic modules 2. However, the present invention is not limited to this. For example, the rechargeable battery unit may be charged with electricity from a commercial power source. The second embodiment of the present invention will be detailed with reference to Fig.9. In the second embodiment, the rechargeable battery unit is charged with electricity generated by the photovoltaic modules in combination with electricity supplied from the commercial power system. It is noted that identical or equivalent elements in the drawings will be referred to by like reference numerals and will be explained only once to avoid repetition.

Electricity from a commercial power system 9 is supplied to the control unit 6. AC power from the commercial power system 9 is converted into DC power by a AC/DC converter 68. Then, this DC power is supplied to a DC/DC controller 61 via a switch circuit 67. Electricity generated by the photovoltaic modules 2 is also supplied to the switch circuit 67. The switch circuit changes the electricity to be supplied to the DC/DC controller 61 to the photovoltaic modules 2 or the commercial power system 9 under the control of the controller 60.

The controller 60 detects a remaining amount of the rechargeable battery unit 62 based on the voltage of the rechargeable battery unit 62, for example. When the remaining amount of the rechargeable battery unit 62 is equal to or less than the predetermined amount and the photovoltaic modules 2 do not generate electricity, the controller 60 controls the switch circuit 67 so as to change the electricity to be supplied to the DC/DC controller 61 to the electricity supplied from the commercial power system 9. The AC power supplied from the commercial power system 9 is converted into DC power by the AC/DC converter 68. Then, this DC power is supplied to the DC/DC controller 61 via the switch circuit 67.

The DC/DC controller 61 performs over-current prevention, back-flow prevention, over-charge prevention, and other control operations to the DC power which is converted by the AC/DC converter 68, and then creates an appropriate voltage for the rechargeable battery unit 62 which is provided by e.g. Nickel-Hydrogen batteries and lithium ion secondary batteries, and thus supplies an electric current to the rechargeable battery unit 62. The rechargeable battery unit 62 is charged with the electric current supplied from the DC/DC controller 61. As mentioned above, the rechargeable battery unit 62 is charged with electricity which is supplied from the commercial power system 9.

The DC power which is converted by the AC/DC converter 68 from the commercial power system 9 may be supplied to the inverter 63and the DC/DC converter 64 via the DC/DC controller 61, and then supplied to the AC charging unit 65 and the DC charging unit 66.

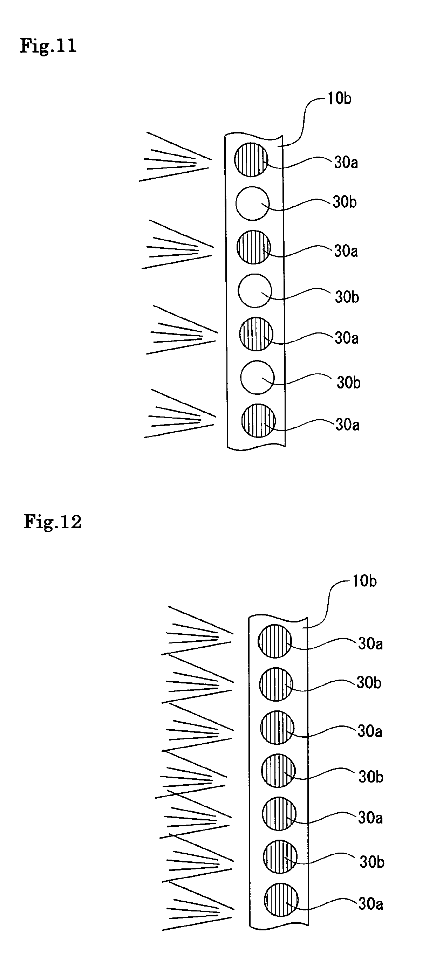

Next, the third embodiment of the present invention will be detailed with reference to Fig.11 to Fig.12. The above-mentioned embodiment includes a high-luminosity LED lighting element 3a and a low-luminosity LED lighting element 3b, and the control unit performs an ON/OFF control of the high-luminosity LED lighting element 3a and the low-luminosity LED lighting element 3b. On the other hand, in the third embodiment, the number of LED lighting elements to be turned ON is controlled in accordance with an output from a sensor 7. Therefore, in the third embodiment, ON/OFF control of LED lighting elements group is performed. The lighting elements group is represented as the first LED lighting elements group 30a and the second LED lighting elements group 30b.

As shown in Fig.11 and Fig.12, the LED including the first LED lighting elements group 30a and the second LED lighting elements group 30b are installed in the arch sections 10b to provide illumination to parking spaces, charging plugs and other operation sections, etc. in the charging units. The first LED lighting elements group 30a and the second LED lighting elements group 30b are arranged alternately in the LED.

As shown in Fig.11, when the sensor 7 indicates that there is no vehicle, the controller 60 controls to turn ON only the first LED lighting elements group 30a to save electricity. When sensor 7 indicates that there is an incoming vehicle C, both the first LED lighting elements group 30a and the second LED lighting elements group 30b are turned ON as a guide to the parking space 5 by the control of the controller 60 to illuminate the area lines 51, the parking area number, etc. to guide the vehicle C, as shown in Fig.12.

When sensor 7 indicates that the vehicle C has stopped, the second LED lighting elements group 30b is turned OFF while the LED lighting elements of the operation section is turned ON to make the charging operation easy.

As described, ON/OFF control of the first LED lighting elements group 30a and the second LED lighting elements group 30b is performed in accordance with the position of the vehicles C, whereby power consumption from the rechargeable battery unit is controlled efficiently to maximize the amount of electricity which can be used for charging the vehicles C.

The number of the LED lighting elements to be turned ON is not limited to the above-mentioned example. The number and the arrangement may be changed appropriately as necessary, for example, two first LED lighting elements group 30a and one second LED lighting elements group 30b.

Also, the embodiment described above can charge four electric vehicles including plug-in hybrid vehicles or other vehicles. However, the present invention is not limited to this. The number of the charging units and the number of vehicles which can be charged thereby may be changed appropriately as necessary.

It should be understood that the embodiments disclosed herein are to be taken as examples in every point and are not limited. The scope of the present invention is defined not by the above described embodiments but by the appended claims. All changes that fall within means and bounds of the claims, or equivalence of such means and bounds are intended to be embraced by the claims.

## Claims

1. A solar-powered battery charging station comprising:
a roof member supported by a support member ;
photovoltaic modules provided on the roof member;
a rechargeable battery unit for storage of electricity generated by the photovoltaic modules;
a charging unit for supply of charging electricity to a vehicle;
lighting equipment including lighting appliances lit with electricity from the rechargeable battery unit ; and
a control unit for control of turning ON and OFF of the lighting appliances .

2. The solar-powered battery charging station according to Claim 1, comprising a sensor for detecting vehicles, wherein the lighting appliances include a plurality of lighting elements and the control unit elects the lighting elements to be turned ON based on an output of the sensor.

3. The solar-powered battery charging station according to Claim 1 or 2, wherein the lighting appliances include a low-luminosity LED lighting element and a high-luminosity LED lighting element, the control unit turning ON the low-luminosity LED lighting element on standby while turning ON the high-luminosity LED lighting element to illuminate a parking space upon detection of a vehicle entering the parking space.

4. The solar-powered battery charging station according to Claim 1, 2 or 3, wherein the lighting appliances include a lighting appliance for illuminating a operation section of the charging unit, the control unit turning ON the lighting appliance for illuminating the operation section upon detection of a vehicle stopping in the parking space.

5. The solar-powered battery charging station according to one of Claims 1 to 4, connected to a commercial power system, wherein the rechargeable battery unit is charged with electricity generated by the photovoltaic modules in combination with electricity supplied from the commercial power system.

6. The solar-powered battery charging station according to one of Claims 1 to 5, wherein the charging unit includes an AC charging unit and a DC charging unit.

7. The solar-powered battery charging station according to one of Claims 1 to 6, wherein the support member includes a column section and an arch section providing an upward opening structure, the lighting equipment being installed on the arch section.

8. The solar-powered battery charging station according to one of Claims 1 to 7, wherein the roof member includes a circular outer frame and support frames connected to the outer frame to form a grid-like structure.
